# FASCICULE DE BREVET EUROPEEN

(11) **EP 0 964 884 B1**
(45) Date de publication et mention de la délivrance du brevet: **03.08.2005**
(21) Numéro de dépôt: 98912415.1
(22) Date de dépôt: 21.02.1998
(51) Int. Cl.: C08J 9/14

(54) **COMPOSITIONS AZEOTROPIQUES OU PSEUDO-AZEOTROPIQUES ET UTILISATION DE CES COMPOSITIONS**
AZEOTROPISCHE ODER AZEOTROPÄHNLICHE ZUSAMMENSETZUNGEN UND IHRE VERWENDUNGEN
AZEOTROPIC OR PSEUDO-AZEOTROPIC COMPOSITIONS AND USE OF THESE COMPOSITIONS

(30) Priorité: 03.03.1997 BE 9700184; 03.12.1997 BE 9700984
(43) Date de publication de la demande: 22.12.1999
(73) Titulaire: SOLVAY (Société Anonyme), 1050 Bruxelles (BE)
(72) Inventeur: BARTHELEMY, Pierre, B-1315 Pietrebais (BE); BUYLE, Olivier, B-6039 Goutroux (BE); DOURNEL, Pierre, B-1020 Bruxelles (BE)
(74) Mandataire: Jacques, Philippe
(86) Numéro de dépôt international: PCT/EP1998/001124
(87) Numéro de publication internationale: WO 1998/039378

(56) Documents cités:
- WO-A-96/30487
- WO-A-97/31989
- DATABASE WPI Section Ch, Week 9648 Derwent Publications Ltd., London, GB; Class A25, AN 96-483946 XP002039032 ANONYMOUS: "Aq. azeotropic and azeotrope-like blowing agents for poly-isocyanate foams - contg. fluorinated hydrocarbon cpds., iodo-substd. fluoro:hydrocarbon cpds. or fluoro:carbon cpds. opt. as substits. in cyclic ether, sulphide or amine cpds., etc." & RESEARCH DISCLOSURE, vol. 390, no. 050, 10 octobre 1996, EMSWORTH, GB,
- DATABASE WPI Section Ch, Week 9349 Derwent Publications Ltd., London, GB; Class A32, AN 93-392792 XP002039031 & JP 05 295 154 A (ASAHI GLASS CO LTD) , 9 novembre 1993
- PATENT ABSTRACTS OF JAPAN vol. 017, no. 704 (C-1146), 22 décembre 1993 & JP 05 239251 A (DAIKIN IND LTD), 17 septembre 1993,
- PATENT ABSTRACTS OF JAPAN vol. 017, no. 582 (C-1123), 22 octobre 1993 & JP 05 171190 A (ASAHI GLASS CO LTD), 9 juillet 1993, cité dans la demande
- PATENT ABSTRACTS OF JAPAN vol. 017, no. 571 (C-1121), 18 octobre 1993 & JP 05 168805 A (ASAHI GLASS CO LTD), 2 juillet 1993, cité dans la demande

## Description

L'invention concerne des compositions comprenant du 1,1,1,3,3-pentafluorobutane (appelé également HFC-365mfc) et l'utilisation de ces compositions, en particulier comme agents gonflants pour des mousses cellulaires polymériques et plus particulièrement pour des mousses de polyuréthanne.

Il est bien connu que des mousses de polyuréthanne peuvent être préparées en faisant réagir un isocyanate avec une quantité appropriée d'un polyol ou d'un mélange de polyols, en présence d'un agent gonflant constitué d'un liquide volatil, lequel est vaporisé par la chaleur dégagée par la réaction entre l'isocyanate et le polyol. Le trichlorofluorométhane (CFC-11), le dichlorodifluorométhane (CFC 12) et, dans une moindre mesure, le chlorodifluorométhane (HCFC-22), le 1,1,2-trichlorotrifluoroéthane (CFC-113) et le 1,2-dichlorotétrafluoroéthane (CFC-114) ont été pendant longtemps utilisés comme agents gonflants. En raison de sa très faible conductibilité thermique, le CFC-11 permet d'obtenir des mousses de polyuréthanne rigides particulièrement isolantes, lesquelles sont utilisées intensivement comme isolants thermiques, notamment dans les domaines du bâtiment, de la réfrigération et des transports.

Toutefois, les hydrocarbures chlorofluorés complètement halogénés (CFC) sont suspectés de provoquer des problèmes d'environnement, principalement dans le cadre de la destruction de la couche d'ozone stratosphérique. Ils sont aujourd'hui interdits dans la plupart de leurs applications classiques.

Les hydrofluoroalcanes exempts de chlore sont totalement inertes vis-à-vis de la couche d'ozone stratosphérique et l'on constate une utilisation de plus en plus large de ces composés dans de nombreuses applications au détriment des composés porteurs d'atomes de chlore. Ainsi, le 1,1,1,3,3-pentafluorobutane (HFC-365mfc) a été proposé dans diverses applications.

Les demandes de brevet japonais JP 05/168805 et JP 05/171190 décrivent des compositions de solvants comprenant du 1,1,1,3,3-pentafluorobutane, un cosolvant soluble dans le 1,1,1,3,3-pentafluorobutane et éventuellement un surfactant. Ces compositions sont utilisables dans des opérations de nettoyage d'objets ou pour l'élimination d'eau résiduaire dans l'industrie électronique. Les seules compositions binaires décrites comprennent 4 % de n-pentane, 10 % de cyclopentane ou encore 5 % d'hexane.

Murphy et ses collaborateurs (International CFC and Halon Alternatives Conference; Washington DC, 1993, pp. 346-355) ont décrit l'utilisation de mélanges binaires cyclopentane/HFC-365mfc contenant au moins 54 % en poids de cyclopentane comme agent gonflant pour mousses de polyuréthanne. On a toutefois remarqué que le HFC-365mfc et les mélanges mentionnés ci-dessus risquent, dans certains cas et certaines circonstances, de se condenser dans les cellules de la mousse, entraînant, le cas échéant, une détérioration de sa conductibilité thermique et éventuellement de ses propriétés mécaniques.

Le besoin subsiste encore de trouver des compositions d'agents gonflants pour mousses cellulaires polymériques dépourvues d'effet néfaste pour l'environnement, ayant un point d'ébullition proche du point d'ébullition du CFC 11 ou du 1,1-dichloro-1-fluoroéthane (HCFC-141b) et possédant les propriétés physiques qui permettent de former des mousses cellulaires polymériques de faible conductibilité thermique dans une large gamme de températures, particulièrement des mousses à cellules fermées et de taille homogène.

Un des objets de la présente invention est de fournir des compositions qui soient particulièrement performantes lorsqu'elles sont utilisées comme agents gonflants, en particulier pour la fabrication de mousses de polyuréthanne. Un autre objet de l'invention est de fournir de telles compositions dépourvues d'effet destructeur vis-à-vis de la couche d'ozone et dès lors utilisables en remplacement des compositions à base de chlorofluoroalcanes complètement halogénés tel le CFC-11 ou d'hydrocarbures partiellement halogénés contenant des atomes de chlore tel le HCFC-141b.

La présente invention concerne dès lors des compositions constituées essentiellement de 1,1,1,3,3-pentafluorobutane et d'un alcane possédant 5 ou 6 atomes de carbone qui se caractérisent en ce qu'elles sont azéotropiques ou pseudo-azéotropiques. Le document WO 97/31989 fait partie de l'état de la technique pour les Etats désignés DE, ES, FR, GB, IT, NL.

Fondamentalement, l'état thermodynamique d'un fluide est défini par quatre variables interdépendantes : la pression (P), la température (T), la composition de la phase liquide (X) et la composition de la phase gazeuse (Y). Un azéotrope vrai est un système particulier à 2 ou plusieurs composants pour lequel, à une température donnée et à une pression donnée, la composition de la phase liquide X est exactement égale à la composition de la phase gazeuse Y. Un pseudo-azéotrope est un système à 2 ou plusieurs composants pour lequel, à une température donnée et à une pression donnée, X est substantiellement égal à Y. En pratique, cela signifie que les constituants de tels systèmes azéotropiques et pseudo-azéotropiques ne peuvent pas être séparés facilement par distillation et dès lors leur composition reste constante dans les opérations de gonflage de mousse cellulaires polymériques.

Aux fins de la présente invention, on entend par mélange pseudo-azéotropique, un mélange de deux constituants dont le point d'ébullition (à une pression donnée) diffère du point d'ébullition de l'azéotrope vrai de 0,5 °C au maximum. Les mélanges dont le point d'ébullition diffère du point d'ébullition de l'azéotrope vrai de 0,2 °C au maximum sont préférés. Les mélanges dont le point d'ébullition diffère du point d'ébullition de l'azéotrope vrai de 0,1 °C au maximum sont particulièrement préférés.

Les alcanes possédant 5 ou 6 atomes de carbone utilisables dans les compositions selon l'invention peuvent être linéaires, ramifiés ou cycliques. Parmi tous les isomères possibles des hydrocarbures possédant 5 ou 6 atomes de carbone, le pentane linéaire (ou n-pentane), l'isopentane (ou 2-méthylbutane), le cyclopentane et l'hexane linéaire (ou n-hexane) sont préférés. Ceux-ci forment avec le 1,1,1,3,3-pentafluorobutane des compositions azéotropiques ou pseudo-azéotropiques à point d'ébullition minimum.

Les mélanges binaires azéotropiques et pseudo-azéotropiques formés entre le 1,1,1,3,3-pentafluorobutane et le cyclopentane sont particulièrement préférés.

Les teneurs relatives en 1,1,1,3,3-pentafluorobutane et en alcane possédant 5 ou 6 atomes de carbone dans les compositions selon l'invention peuvent varier dans de larges proportions pour autant que les compositions ainsi formées soient azéotropiques ou pseudo-azéotropiques à point d'ébullition minimum.

Les compositions des mélanges azéotropiques selon l'invention ont été estimées par calcul sur base des résultats des mesures expérimentales présentées dans les exemples ci après.

Le 1,1,1,3,3 pentafluorobutane et le n-pentane forment un azéotrope ou un pseudo-azéotrope binaire lorsque leur mélange contient environ de 24 à 60 % en poids de n-pentane. Les compositions binaires contenant environ de 30 à 53 % en poids de n-pentane sont préférées. Les compositions binaires contenant environ de 32 à 47 % en poids sont particulièrement préférées. Sous une pression de 103,5 kPa, la composition binaire constituée essentiellement d'environ 66 % en poids de 1,1,1,3,3 pentafluorobutane et d'environ 34 % en poids de n-pentane constitue un azéotrope vrai, dont le point d'ébullition est d'environ 27,4 °C. Cette composition est tout particulièrement préférée.

Le 1,1,1,3,3 pentafluorobutane et le cyclopentane forment un azéotrope ou un pseudo-azéotrope binaire lorsque leur mélange contient environ de 16 à 46 % en poids de cyclopentane. Les compositions binaires contenant environ de 18,5 à 39 % en poids de cyclopentane sont préférées. Les compositions binaires contenant environ de 20 à 35 % en poids de cyclopentane sont particulièrement préférées. Sous une pression de 101,4 kPa, la composition binaire constituée essentiellement d'environ 78,5 % en poids de 1,1,1,3,3 pentafluorobutane et d'environ 21,5 % en poids de cyclopentane constitue un azéotrope vrai, dont le point d'ébullition est d'environ 32,2 °C. Cette composition est tout particulièrement préférée.

Le 1,1,1,3,3 pentafluorobutane et l'isopentane forment un azéotrope ou un pseudo-azéotrope binaire lorsque leur mélange contient environ de 31 à 75 % en poids d'isopentane. Les compositions binaires contenant environ de 39 à 70 % en poids d'isopentane sont préférées. Les compositions binaires contenant environ de 45 à 60 % en poids d'isopentane sont particulièrement préférées. Sous une pression de 101,2 kPa, la composition binaire constituée essentiellement d'environ 53 % en poids de 1,1,1,3,3 pentafluorobutane et d'environ 47 % en poids d'isopentane constitue un azéotrope vrai, dont le point d'ébullition est d'environ 22,5 °C. Cette composition est tout particulièrement préférée.

Le 1,1,1,3,3 pentafluorobutane et le n-hexane forment un azéotrope ou un pseudo-azéotrope binaire lorsque leur mélange contient environ de 6 à 29 % en poids de n-hexane. Les compositions binaires contenant environ de 9,5 à 24 % en poids de n-hexane sont préférées. Sous une pression de 102,1 kPa, la composition binaire constituée essentiellement d'environ 90 % en poids de 1,1,1,3,3 pentafluorobutane et d'environ 10 % en poids de n-hexane constitue un azéotrope vrai, dont le point d'ébullition est d'environ 37,9 °C. Cette composition est tout particulièrement préférée.

L'invention concerne également l'utilisation des compositions selon l'invention pour le gonflage de mousses cellulaires polymériques.

Les mousses cellulaires polymériques peuvent être obtenues selon divers procédés. Un procédé couramment utilisé consiste à injecter sous pression un agent gonflant dans un mélange polymérique fondu à expanser dans une extrudeuse. La décompression obtenue à la sortie de l'extrudeuse conduit à l'expansion du mélange polymérique avec formation d'une mousse constituée de cellules remplies de l'agent gonflant. Les mousses de polystyrène sont généralement obtenues par ce procédé. Un autre procédé, utilisé typiquement pour fabriquer des mousses de polyuréthanne ou de polyisocyanurate, consiste à faire réagir un isocyanate avec une quantité appropriée d'un polyol ou d'un mélange de polyols, en présence d'un agent gonflant constitué d'un liquide volatil, lequel est vaporisé par la chaleur dégagée par la réaction entre l'isocyanate et le polyol. Les compositions selon l'invention sont particulièrement recommandées pour le gonflage de mousses de polyuréthanne ou de polyisocyanurate, tout particulièrement pour fabriquer des mousses rigides. Dans ce cas, on met généralement en oeuvre de 1 à 40, typiquement de 15 à 35 parts en poids d'agent gonflant pour 100 parts en poids de polyol.

L'invention concerne également des agents gonflants pour mousses cellulaires polymériques, qui se caractérisent en ce qu'ils renferment une composition azéotropique ou pseudo-azéotropique selon l'invention.

Les agents gonflants renfermant une composition selon l'invention constituée de 1,1,1,3,3-pentafluorobutane et de cyclopentane sont particulièrement adaptées à la préparation de mousses de polyuréthanne ou de polyisocyanurate.

Dans une variante conforme à l'invention, les agents gonflants contiennent également du n-butane ou de l'isobutane, typiquement de 2 à 20 % en poids, de préférence de 5 à 15 % en poids.

Les agents gonflants pour mousses cellulaires polymériques peuvent également contenir un stabilisant de la composition azéotropique ou pseudo-azéotropique selon l'invention, tel que du nitrométhane ou de l'alphaméthylstyrène.

Les compositions azéotropiques ou pseudo-azéotropiques selon l'invention peuvent être utilisées dans des prémélanges pour mousses de polyuréthanne ou de polyisocyanurate. De tels prémélanges contiennent au moins un polyol, une composition azéotropique ou pseudo-azéotropique selon l'invention et éventuellement divers additifs utilisés habituellement pour préparer des mousses de polyuréthanne ou de polyisocyanurate tels que notamment de l'eau, des catalyseurs, des agents tensioactifs, des agents antioxydants, des agents retardateurs de flamme et/ou des pigments. Les prémélanges contenant les compositions azéotropiques ou pseudo-azéotropiques selon l'invention font également partie de la présente invention.

L'invention concerne aussi l'utilisation des compositions azéotropiques ou pseudo-azéotropiques décrites ci-dessus comme fluides réfrigérants , comme solvants, comme agents dessicatifs ou comme agents dégraissants de surfaces solides.

Les exemples ci-après, non limitatifs, illustrent l'invention de manière plus détaillée.

### Exemples 1-4

Pour mettre en évidence l'existence de compositions azéotropiques ou pseudo-azéotropiques selon l'invention entre le 1,1,1,3,3 pentafluorobutane et un hydrocarbure possédant 5 ou 6 atomes de carbone, on a utilisé un appareillage en verre constitué d'un flacon bouilleur de 50 ml surmonté d'un condenseur à reflux. La température du liquide a été mesurée au moyen d'un thermomètre plongeant dans le flacon.

Une quantité de 1,1,1,3,3 pentafluorobutane pur déterminée avec précision a été chauffée sous une pression connue jusqu'à ébullition, puis de petites quantités d'hydrocarbure, pesées avec précision, ont été progressivement introduites dans le flacon au moyen d'une seringue, via une tubulure latérale.

La détermination des compositions pseudo-azéotropiques a été réalisée par un relevé de l'évolution de la température d'ébullition du mélange en fonction de sa composition.

Ces mesures ont été réalisées pour des mélanges contenant du 1,1,1,3,3-pentafluorobutane et des quantités croissantes de n-pentane (exemple 1), de cyclopentane (exemple 2), d'isopentane (exemple 3) ou de n-hexane (exemple 4).

La pression à laquelle les mesures ont été prises est mentionnée. L'évolution de la température d'ébullition des différentes compositions en fonction de leur teneur en hydrocarbure, exprimée en % poids, est présentée dans le tableau I.

**Tableau I**

| Exemple 1 | | Exemple 2 | | Exemple 3 | | Exemple 4 | |
|---|---|---|---|---|---|---|---|
| HFC-365mfc / n-pentane (Pression : 103,5 kPa) | | HFC-365mfc / cyclopentane (Pression : 101,4 kPa) | | HFC-365mfc / isopentane (Pression : 101,2 kPa | | HFC-365mfc / n-hexane (Pression : 102,1 kPa) | |
| pentane (% poids) | T°éb (°C) | cyclopentane (% poids) | T°éb (°C) | isopentane (% poids) | T°éb (°C) | hexane (% poids) | T°éb (°C) |
| 0 | 40,6 | 0 | 40,3 | 0 | 40,3 | 0 | 40,5 |
| 1,32 | 39,2 | 2,96 | 37,6 | 1,14 | 38,9 | 1,36 | 39,9 |
| 2,52 | 37,5 | 4,88 | 36,0 | 4,43 | 34,5 | 2,58 | 39,4 |
| 3,63 | 36,0 | 7,09 | 34,8 | 5,96 | 32,3 | 3,14 | 39,2 |
| 4,39 | 35,1 | 8,75 | 34,1 | 7,5 | 30,6 | 4,19 | 38,9 |
| 5,2 | 34,1 | 10,64 | 33,6 | 8,93 | 29,2 | 5,71 | 38,6 |
| 6,49 | 32,7 | 12,4 | 33,2 | 12,7 | 27,0 | 7,79 | 38,3 |
| 9,2 | 31,0 | 14,22 | 32,8 | 14,94 | 26,2 | 9,76 | 38,1 |
| 11,01 | 30,2 | 16,04 | 32,6 | 18,48 | 24,6 | 11,14 | 38,0 |
| 12,26 | 29,7 | 17,7 | 32,5 | 20,96 | 24,2 | 13,15 | 37,9 |
| 15,51 | 28,8 | 19,2 | 32,3 | 25,86 | 23,6 | 15 | 37,9 |
| 16,93 | 28,6 | 21,36 | 32,2 | 29,25 | 23,2 | 16,7 | 37,9 |
| 18,87 | 28,3 | 23,29 | 32,2 | 32,64 | 22,9 | 18,31 | 38,0 |
| 20,77 | 28,1 | 25,19 | 32,2 | 37,09 | 22,8 | 20,13 | 38,0 |
| 22,53 | 28,0 | 27,57 | 32,2 | 41,19 | 22,6 | 21,74 | 38,0 |
| 24,3 | 27,9 | 30,35 | 32,2 | 45,06 | 22,6 | 23,36 | 38,1 |
| 26,68 | 27,8 | 31,45 | 32,2 | 48,41 | 22,5 | 25,26 | 38,2 |
| 29,35 | 27,6 | 33,74 | 32,2 | 51,07 | 22,5 | 28,78 | 38,4 |
| 31,9 | 27,5 | 36,28 | 32,3 | 54,35 | 22,5 | 33,16 | 38,6 |
| 34,6 | 27,4 | 38,95 | 32,4 | 56,69 | 22,5 | 36,6 | 38,7 |
| 37,11 | 27,4 | 41,99 | 32,5 | 58,93 | 22,5 | 40,34 | 39,0 |
| 39,46 | 27,4 | 46,41 | 32,6 | 60,65 | 22,5 | 43,54 | 39,4 |
| 41,6 | 27,4 | 53,88 | 33,0 | 70,14 | 22,7 | 49,35 | 39,8 |
| 44,02 | 27,4 | 57,97 | 33,3 | 74,77 | 23,0 | 56,48 | 41,0 |
| 53 | 27,6 | 66,68 | 33,9 | 80,28 | 23,6 | 59,69 | 41,6 |
| 59,56 | 27,8 | 71,76 | 34,7 | 89,84 | 25,1 | 67,28 | 43,4 |
| 65,96 | 28,2 | 79,47 | 36,7 | 100 | 28,0 | 77,13 | 47,2 |
| 71,65 | 28,8 | 92,94 | 43,3 | | | 88,13 | 54,3 |
| 100 | 36,6 | 100 | 49,3 | | | 100 | 67,0 |

### Exemples 5-8

On a préparé des mousses de polyuréthanne au départ d'une même formulation, mais en utilisant comme agent gonflant soit du HFC-365mfc (exemple 5), du cyclopentane (exemple 6), une composition HFC-365mfc / cyclopentane consituée, en poids, de 72 parts de HFC-365mfc et de 28 parts de cyclopentane (exemple 7) et une composition HFC-365mfc / n-pentane, consituée, en poids, de 58,4 parts de HFC-365mfc et de 41,6 parts de n-pentane (exemple 8). On a ensuite mesuré la conductibilité thermique (Lambda) de ces mousses à différentes températures. Les variations de conductibilité thermique sont présentés au tableau II. On a pris comme référence la conductibilité thermique, mesurée à 24 °C, d'une mousse obtenue avec du HFC-365mfc. Les variations sont exprimées en pourcents par rapport à cette référence. Une variation positive correspond à une augmentation de conductibilité, c'est-à-dire à une diminution du pouvoir isolant de la mousse.

**Tableau II**

| | Exemple 5 | Exemple 6 | Exemple 7 | Exemple 8 |
|---|---|---|---|---|
| Agent gonflant | HFC-365mfc | cyclopentane | HFC-365mfc / cyclopentane | HFC-365mfc / n-pentane |
| Variation de conductibilité (%) | | | | |
| à - 7,5 °C | + 6,4 | + 2,4 | 0 | + 2,8 |
| à 0 °C | + 4,8 | + 2 | - 1,6 | + 1,2 |
| à 10 °C | + 1,2 | + 1,2 | - 6 | + 1,2 |
| à 24 °C | 0 | + 2,4 | 0 | + 2,4 |

Alors que la conductibilité thermique en phase gazeuse du cyclopentane est plus élevée que celle du HFC-365mfc (respectivement 12 et 10,6 mW/m.K à 25 °C), une mousse de polyuréthanne gonflée avec le mélange azéotropique 1,1,1,3,3-pentafluorobutane / cyclopentane présente à basse température une conductibilité thermique inférieure à celle d'une mousse comparable gonflée avec du HFC-365mfc, en absence de cyclopentane.

Des résultats similaires sont obtenus avec la composition azéotropique HFC-365mfc / n-pentane.

## Revendications (Revendications pour l'(les) Etat(s) contractant(s) suivant(s): AT, BE, DK, FI, GR, IE, LU, MC, PT, SE)

1. Composition constituée essentiellement de 1,1,1,3,3-pentafluorobutane et d'un alcane contenant 5 ou 6 atomes de carbone **caractérisée en ce qu'**elle est azéotropique ou pseudo-azéotropique.

2. Composition selon la revendication 1 dans laquelle l'alcane contenant 5 ou 6 atomes de carbone est choisi parmi le n-pentane, le cyclopentane, l'isopentane et le n-hexane.

3. Composition selon la revendication 2 contenant 24 à 60 % en poids de n-pentane ou 16 à 46 % en poids de cyclopentane ou 31 à 75 % en poids d'isopentane ou 6 à 29 % en poids de n-hexane.

4. Composition selon la revendication 3 contenant 30 à 53 % en poids de n-pentane ou 18,5 à 39 % en poids de cyclopentane ou 39 à 70 % en poids d'isopentane ou 9,5 à 24 % en poids de n-hexane.

5. Composition selon la revendication 4 contenant 32 à 47 % en poids de n-pentane ou 20 à 35 % en poids de cyclopentane ou 45 à 60 % en poids d'isopentane.

6. Composition azéotropique à point d'ébullition minimum selon la revendication 5, composée d'environ 66 % en poids de 1,1,1,3,3-pentafluorobutane et d'environ 34 % en poids de n-pentane, dont le point d'ébullition est d'environ 27,4 °C sous une pression de 103,5 kPa.

7. Composition azéotropique à point d'ébullition minimum selon la revendication 5, composée d'environ 78,5 % en poids de 1,1,1,3,3-pentafluorobutane et d'environ 21,5 % en poids de cyclopentane, dont le point d'ébullition est d'environ 32,2 °C sous une pression de 101,4 kPa.

8. Composition azéotropique à point d'ébullition minimum selon la revendication 5, composée d'environ 53 % en poids de 1,1,1,3,3-pentafluorobutane et d'environ 47 % en poids de isopentane, dont le point d'ébullition est d'environ 22,5 °C sous une pression de 101,2 kPa.

9. Composition azéotropique à point d'ébullition minimum selon la revendication 4, composée d'environ 90 % en poids de 1,1,1,3,3-pentafluorobutane et d'environ 10 % en poids de n-hexane, dont le point d'ébullition est d'environ 37,9 °C sous une pression de 102,1 kPa.

10. Utilisation des compositions azéotropiques ou pseudo-azéotropiques selon l'une quelconque des revendications 1 à 9 pour le gonflage de mousses cellulaires polymériques.

11. Utilisation selon la revendication 10 **caractérisée en ce que** la mousse cellulaire polymérique est une mousse de polyuréthanne ou de polyisocyanurate.

12. Utilisation selon la revendication 11, dans laquelle la mousse cellulaire polymérique est une mousse de polyuréthanne rigide.

13. Agent gonflant pour mousses cellulaires polymériques **caractérisé en ce qu'**il comprend une composition azéotropique ou pseudo-azéotropique selon l'une quelconque des revendications 1 à 9.

14. Prémélange pour mousse de polyuréthanne **caractérisé en ce qu'**il comprend une composition azéotropique ou pseudo-azéotropique selon l'une quelconque des revendications 1 à 9, au moins un polyol et éventuellement divers additifs habituels.

15. Utilisation des compositions selon les revendications 1 à 9 comme fluides réfrigérants, comme solvants, comme agents dessicatifs ou comme agents dégraissants de surfaces solides.

## Revendications (Revendications pour l'(les) Etat(s) contractant(s) suivant(s): DE, ES, FR, GB, IT, NL)

1. Composition constituée essentiellement de 1,1,1,3,3-pentafluorobutane et d'un alcane contenant 5 ou 6 atomes de carbone **caractérisée en ce qu'**elle est azéotropique ou pseudo-azéotropique, sous réserve que, lorsque l'alcane est le cyclopentane, elle contient de 18,5 à 39 % en poids de cyclopentane.

2. Composition selon la revendication 1 dans laquelle l'alcane contenant 5 ou 6 atomes de carbone est choisi parmi le n-pentane, le cyclopentane, l'isopentane et le n-hexane.

3. Composition selon la revendication 2 contenant 24 à 60 % en poids de n-pentane ou 31 à 75 % en poids d'isopentane ou 6 à 29 % en poids de n-hexane.

4. Composition selon la revendication 3 contenant 30 à 53 % en poids de n-pentane ou 39 à 70 % en poids d'isopentane ou 9,5 à 24 % en poids de n-hexane.

5. Composition selon la revendication 1 contenant 32 à 47 % en poids de n-pentane ou 20 à 35 % en poids de cyclopentane ou 45 à 60 % en poids d'isopentane.

6. Composition azéotropique à point d'ébullition minimum selon la revendication 5, composée d'environ 66 % en poids de 1,1,1,3,3-pentafluorobutane et d'environ 34 % en poids de n-pentane, dont le point d'ébullition est d'environ 27,4 °C sous une pression de 103,5 kPa.

7. Composition azéotropique à point d'ébullition minimum selon la revendication 5, composée d'environ 78,5 % en poids de 1,1,1,3,3-pentafluorobutane et d'environ 21,5 % en poids de cyclopentane, dont le point d'ébullition est d'environ 32,2 °C sous une pression de 101,4 kPa.

8. Composition azéotropique à point d'ébullition minimum selon la revendication 5, composée d'environ 53 % en poids de 1,1,1,3,3-pentafluorobutane et d'environ 47 % en poids de isopentane, dont le point d'ébullition est d'environ 22,5 °C sous une pression de 101,2 kPa.

9. Composition azéotropique à point d'ébullition minimum selon la revendication 4, composée d'environ 90 % en poids de 1,1,1,3,3-pentafluorobutane et d'environ 10 % en poids de n-hexane, dont le point d'ébullition est d'environ 37,9 °C sous une pression de 102,1 kPa.

10. Utilisation des compositions azéotropiques ou pseudo-azéotropiques selon l'une quelconque des revendications 1 à 9 pour le gonflage de mousses cellulaires polymériques.

11. Utilisation selon la revendication 10 **caractérisée en ce que** la mousse cellulaire polymérique est une mousse de polyuréthanne ou de polyisocyanurate.

12. Utilisation selon la revendication 11, dans laquelle la mousse est une mousse rigide.

13. Utilisation d'une composition azéotropique ou pseudo-azéotropique constituée essentiellement de 1,1,1,3,3-pentafluorobutane et de cyclopentane pour le gonflage de mousses cellulaires rigides de polyuréthanne ou de polyisocyanurate.

14. Agent gonflant pour mousses cellulaires polymériques **caractérisé en ce qu'**il comprend une composition azéotropique ou pseudo-azéotropique selon l'une quelconque des revendications 1 à 9.

15. Prémélange pour mousse de polyuréthanne **caractérisé en ce qu'**il comprend une composition azéotropique ou pseudo-azéotropique selon l'une quelconque des revendications 1 à 9, au moins un polyol et éventuellement divers additifs habituels.

16. Utilisation des compositions selon les revendications 1 à 9 comme fluides réfrigérants, comme solvants, comme agents dessicatifs ou comme agents dégraissants de surfaces solides.

## Patentansprüche (Patentansprüche für folgende(n) Vertragsstaat(en): AT, BE, DK, FI, GR, IE, LU, MC, PT, SE)

1. Im wesentlichen aus 1,1,1,3,3-Pentafluorbutan und einem 5 oder 6 Kohlenstoffatome enthaltenden Alkan bestehende Zusammensetzung, **dadurch gekennzeichnet, daß** sie azeotrop oder pseudo-azeotrop ist.

2. Zusammensetzung nach Anspruch 1, worin das 5 oder 6 Kohlenstoffatome enthaltende Alkan unter n-Pentan, Cyclopentan, Isopentan und n-Hexan ausgewählt ist.

3. Zusammensetzung nach Anspruch 2 mit einem Gehalt an 24 bis 60 Gew.-% n-Pentan oder 16 bis 46 Gew.-% Cyclopentan oder 31 bis 75 Gew.-% Isopentan oder 6 bis 29 Gew.-% n-Hexan.

4. Zusammensetzung nach Anspruch 3 mit einem Gehalt an 30 bis 53 Gew.-% n-Pentan oder 18,5 bis 39 Gew.-% Cyclopentan oder 39 bis 70 Gew.-% Isopentan oder 9,5 bis 24 Gew.-% n-Hexan.

5. Zusammensetzung nach Anspruch 4 mit einem Gehalt an 32 bis 47 Gew.-% n-Pentan oder 20 bis 35 Gew.-% Cyclopentan oder 45 bis 60 Gew.-% Isopentan.

6. Azeotrope Zusammensetzung mit einem Minimumsiedepunkt nach Anspruch 5, zusammengesetzt aus ungefähr 66 Gew.-% 1,1,1,3,3-Pentafluorbutan und ungefähr 34 Gew.-% n-Pentan, deren Siedepunkt ungefähr 27,4°C unter einem Druck von 103,5 kPa beträgt.

7. Azeotrope Zusammensetzung mit einem Minimumsiedepunkt nach Anspruch 5, zusammengesetzt aus ungefähr 78,5 Gew.-% 1,1,1,3,3-Pentafluorbutan und ungefähr 21,5 Gew.-% Cyclopentan, deren Siedepunkt ungefähr 32,2°C unter einem Druck von 101,4 kPa beträgt.

8. Azeotrope Zusammensetzung mit einem Minimumsiedepunkt nach Anspruch 5, zusammengesetzt aus ungefähr 53 Gew.-% 1,1,1,3,3-Pentafluorbutan und ungefähr 47 Gew.-% Isopentan, deren Siedepunkt ungefähr 22,5°C unter einem Druck von 101,2 kPa beträgt.

9. Azeotrope Zusammensetzung mit einem Minimumsiedepunkt nach Anspruch 4, zusammengesetzt aus ungefähr 90 Gew.-% 1,1,1,3,3-Pentafluorbutan und ungefähr 10 Gew.-% n-Hexan, deren Siedepunkt ungefähr 37,9°C unter einem Druck von 102,1 kPa beträgt.

10. Verwendung von azeotropen oder pseudo-azeotropen Zusammensetzungen nach einem der Ansprüche 1 bis 9 zum Auftreiben von zellulären Polymerschäumen.

11. Verwendung nach Anspruch 10, **dadurch gekennzeichnet, daß** der zelluläre Polymerschaum ein Polyurethan- oder Polyisocyanuratschaum ist.

12. Verwendung nach Anspruch 11, worin der zelluläre Polymerschaum ein starrer Polyurethanschaum ist.

13. Treibmittel für zelluläre Polymerschäume, **dadurch gekennzeichnet, daß** es eine azeotrope oder pseudo-azeotrope Zusammensetzung nach einem der Ansprüche 1 bis 9 umfaßt.

14. Polyurethanschaum-Vorgemisch, **dadurch gekennzeichnet, daß** es eine azeotrope oder pseudo-azeotrope Zusammensetzung nach einem der Ansprüche 1 bis 9, wenigstens ein Polyol und gegebenenfalls verschiedene übliche Additive umfaßt.

15. Verwendung von Zusammensetzungen nach den Ansprüchen 1 bis 9 als Kühlfluide, als Lösungsmittel, als Trocknungsmittel oder als Entfettungsmittel für feste Oberflächen.

## Patentansprüche (Patentansprüche für folgende(n) Vertragsstaat(en): DE, ES, FR, GB, IT, NL)

1. Im wesentlichen aus 1,1,1,3,3-Pentafluorbutan und einem 5 oder 6 Kohlenstoffatome enthaltenden Alkan bestehende Zusammensetzung, **dadurch gekennzeichnet, daß** sie azeotrop oder pseudo-azeotrop ist, mit der Maßgabe, daß dann, wenn das Alkan Cyclopentan ist, sie 18,5 bis 39 Gew.-% Cyclopentan enthält.

2. Zusammensetzung nach Anspruch 1, worin das 5 oder 6 Kohlenstoffatome enthaltende Alkan unter n-Pentan, Cyclopentan, Isopentan und n-Hexan ausgewählt ist.

3. Zusammensetzung nach Anspruch 2 mit einem Gehalt an 24 bis 60 Gew.-% n-Pentan oder 31 bis 75 Gew.-% Isopentan oder 6 bis 29 Gew.-% n-Hexan.

4. Zusammensetzung nach Anspruch 3 mit einem Gehalt an 30 bis 53 Gew.-% n-Pentan oder 39 bis 70 Gew.-% Isopentan oder 9,5 bis 24 Gew.-% n-Hexan.

5. Zusammensetzung nach Anspruch 1 mit einem Gehalt an 32 bis 47 Gew.-% n-Pentan oder 20 bis 35 Gew.-% Cyclopentan oder 45 bis 60 Gew.-% Isopentan.

6. Azeotrope Zusammensetzung mit einem Minimumsiedepunkt nach Anspruch 5, zusammengesetzt aus ungefähr 66 Gew.-% 1,1,1,3,3-Pentafluorbutan und ungefähr 34 Gew.-% n-Pentan, deren Siedepunkt ungefähr 27,4°C unter einem Druck von 103,5 kPa beträgt.

7. Azeotrope Zusammensetzung mit einem Minimumsiedepunkt nach Anspruch 5, zusammengesetzt aus ungefähr 78,5 Gew.-% 1,1,1,3,3-Pentafluorbutan und ungefähr 21,5 Gew.-% Cyclopentan, deren Siedepunkt ungefähr 32,2°C unter einem Druck von 101,4 kPa beträgt.

8. Azeotrope Zusammensetzung mit einem Minimumsiedepunkt nach Anspruch 5, zusammengesetzt aus ungefähr 53 Gew.-% 1, 1, 1,3,3-Pentafluorbutan und ungefähr 47 Gew.-% Isopentan, deren Siedepunkt ungefähr 22,5°C unter einem Druck von 101,2 kPa beträgt.

9. Azeotrope Zusammensetzung mit einem Minimumsiedepunkt nach Anspruch 4, zusammengesetzt aus ungefähr 90 Gew.-% 1,1,1,3,3-Pentafluorbutan und ungefähr 10 Gew.-% n-Hexan, deren Siedepunkt ungefähr 37,9°C unter einem Druck von 102,1 kPa beträgt.

10. Verwendung von azeotropen oder pseudo-azeotropen Zusammensetzungen nach einem der Ansprüche 1 bis 9 zum Auftreiben von zellulären Polymerschäumen.

11. Verwendung nach Anspruch 10, **dadurch gekennzeichnet, daß** der zelluläre Polymerschaum ein Polyurethan- oder Polyisocyanuratschaum ist.

12. Verwendung nach Anspruch 11, worin der zelluläre Polymerschaum ein starrer Schaum ist.

13. Verwendung einer im wesentlichen aus 1,1,1,3,3-Pentafluorbutan und Cyclopentan bestehenden azeotropen oder pseudo-azeotropen Zusammensetzung zum Auftreiben von zellulären starren Polyurethan- oder Polyisocyanuratschäumen.

14. Treibmittel für zelluläre Polymerschäume, **dadurch gekennzeichnet, daß** es eine azeotrope oder pseudo-azeotrope Zusammensetzung nach einem der Ansprüche 1 bis 9 umfaßt.

15. Polyurethanschaum-Vorgemisch, **dadurch gekennzeichnet, daß** es eine azeotrope oder pseudo-azeotrope Zusammensetzung nach einem der Ansprüche 1 bis 9, wenigstens ein Polyol und gegebenenfalls verschiedene übliche Additive umfaßt.

16. Verwendung von Zusammensetzungen nach den Ansprüchen 1 bis 9 als Kühlfluide, als Lösungsmittel, als Trocknungsmittel oder als Entfettungsmittel für feste Oberflächen.

## Claims (Claims for the following Contracting State(s): AT, BE, DK, FI, GR, IE, LU, MC, PT, SE)

1. Composition composed essentially of 1,1,1,3,3-pentafluorobutane and of an alkane containing 5 or 6 carbon atoms, **characterized in that** it is azeotropic or pseudoazeotropic.

2. Composition according to Claim 1, in which the alkane containing 5 or 6 carbon atoms is chosen from n-pentane, cyclopentane, isopentane and n-hexane.

3. Composition according to Claim 2, containing 24 to 60% by weight of n-pentane or 16 to 46% by weight of cyclopentane or 31 to 75% by weight of isopentane or 6 to 29% by weight of n-hexane.

4. Composition according to Claim 3, containing 30 to 53% by weight of n-pentane or 18.5 to 39% by weight of cyclopentane or 39 to 70% by weight of isopentane or 9.5 to 24% by weight of n-hexane.

5. Composition according to Claim 4, containing 32 to 47% by weight of n-pentane or 20 to 35% by weight of cyclopentane or 45 to 60% by weight of isopentane.

6. Azeotropic composition with a minimum boiling point according to Claim 5, composed of approximately 66% by weight of 1,1,1,3,3-pentafluorobutane and of approximately 34% by weight of n-pentane, the boiling point of which is approximately 27.4°C under a pressure of 103.5 kPa.

7. Azeotropic composition with a minimum boiling point according to Claim 5, composed of approximately 78.5% by weight of 1,1,1,3,3-pentafluorobutane and of approximately 21.5% by weight of cyclopentane, the boiling point of which is approximately 32.2°C under a pressure of 101.4 kPa.

8. Azeotropic composition with a minimum boiling point according to Claim 5, composed of approximately 53% by weight of 1,1,1,3,3-pentafluorobutane and of approximately 47% by weight of isopentane, the boiling point of which is approximately 22.5°C under a pressure of 101.2 kPa.

9. Azeotropic composition with a minimum boiling point according to Claim 4, composed of approximately 90% by weight of 1,1,1,3,3-pentafluorobutane and of approximately 10% by weight of n-hexane, the boiling point of which is approximately 37.9°C under a pressure of 102.1 kPa.

10. Use of the azeotropic or pseudoazeotropic compositions according to any one of Claims 1 to 9 for the blowing of polymeric cellular foams.

11. Use according to Claim 10, **characterized in that** the polymeric cellular foam is a polyurethane or polyisocyanurate foam.

12. Use according to Claim 11, in which the polymeric cellular foam is a rigid polyurethane foam.

13. Blowing agent for polymeric cellular foams, **characterized in that** it comprises an azeotropic or pseudoazeotropic composition according to any one of Claims 1 to 9.

14. Premix for polyurethane foam, **characterized in that** it comprises an azeotropic or pseudoazeotropic composition according to any one of Claims 1 to 9, at least one polyol and optionally various common additives.

15. Use of the compositions according to Claims 1 to 9 as refrigerating fluids, as solvents, as desiccating agents or as degreasing agents for solid surfaces.

## Claims (Claims for the following Contracting State(s): DE, ES, FR, GB, IT, NL)

1. Composition composed essentially of 1,1,1,3,3-pentafluorobutane and of an alkane containing 5 or 6 carbon atoms, **characterized in that** it is azeotropic or pseudoazeotropic, with the proviso that, when the alkane is cyclopentane, the composition contains from 18.5 to 39% by weight of cyclopentane.

2. Composition according to Claim 1, in which the alkane containing 5 or 6 carbon atoms is chosen from n-pentane, cyclopentane, isopentane and n-hexane.

3. Composition according to Claim 2, containing 24 to 60% by weight of n-pentane or 31 to 75% by weight of isopentane or 6 to 29% by weight of n-hexane.

4. Composition according to Claim 3, containing 30 to 53% by weight of n-pentane or 39 to 70% by weight of isopentane or 9.5 to 24% by weight of n-hexane.

5. Composition according to Claim 1, containing 32 to 47% by weight of n-pentane or 20 to 35% by weight of cyclopentane or 45 to 60% by weight of isopentane.

6. Azeotropic composition with a minimum boiling point according to Claim 5, composed of approximately 66% by weight of 1,1,1,3,3-pentafluorobutane and of approximately 34% by weight of n-pentane, the boiling point of which is approximately 27.4°C under a pressure of 103.5 kPa.

7. Azeotropic composition with a minimum boiling point according to Claim 5, composed of approximately 78.5% by weight of 1,1,1,3,3-pentafluorobutane and of approximately 21.5% by weight of cyclopentane, the boiling point of which is approximately 32.2°C under a pressure of 101.4 kPa.

8. Azeotropic composition with a minimum boiling point according to Claim 5, composed of approximately 53% by weight of 1,1,1,3,3-pentafluorobutane and of approximately 47% by weight of isopentane, the boiling point of which is approximately 22.5°C under a pressure of 101.2 kPa.

9. Azeotropic composition with a minimum boiling point according to Claim 4, composed of approximately 90% by weight of 1,1,1,3,3-pentafluorobutane and of approximately 10% by weight of n-hexane, the boiling point of which is approximately 37.9°C under a pressure of 102.1 kPa.

10. Use of the azeotropic or pseudoazeotropic compositions according to any one of Claims 1 to 9 for the blowing of polymeric cellular foams.

11. Use according to Claim 10, **characterized in that** the polymeric cellular foam is a polyurethane or polyisocyanurate foam.

12. Use according to Claim 11, in which the foam is a rigid foam.

13. Use of an azeotropic or pseudoazeotropic composition composed essentially of 1,1,1,3,3-pentafluorobutane and of cyclopentane for the blowing of rigid polyurethane or polyisocyanurate cellular foams.

14. Blowing agent for polymeric cellular foams, **characterized in that** it comprises an azeotropic or pseudoazeotropic composition according to any one of Claims 1 to 9.

15. Premix for polyurethane foam, **characterized in that** it comprises an azeotropic or pseudoazeotropic composition according to any one of Claims 1 to 9, at least one polyol and optionally various common additives.

16. Use of the compositions according to Claims 1 to 9 as refrigerating fluids, as solvents, as desiccating agents or as degreasing agents for solid surfaces.
